# EUROPEAN PATENT APPLICATION

(11) **EP 4 070 915 A1**
(43) Date of publication of application: **12.10.2022**
(21) Application number: 21166898.3
(22) Date of filing: 06.04.2021
(51) Int. Cl.: B24B 41/06, B24B 19/06, B24B 1/00, B24B 49/12, B24B 51/00

(54) **WORKPIECE HOLDER AND METHOD FOR MANUFACTURING A ROTATIONAL-SYMMETRICAL TOOL**

(71) Applicant: Agathon AG, Maschinenfabrik, 4512 Bellach (CH)
(72) Inventor: Metzger, Felix Jakob, 4512 Bellach (CH); Huynh, Cuong, 4512 Bellach (CH); Zenger, Christian, 3428 Wiler b. Utzenstorf (CH)
(74) Representative: BOVARD AG

(57) **Abstract**

Workpiece holder (3) for coupling a workpiece (2) provided with reference surfaces (30) to a machining device (200) for manufacturing a rotational-symmetrical tool (1) with at least one geometrically defined cutting edge (10), the workpiece holder (3) comprises a machine part (31) configured to be connectable to the machining device (200) in a releasable rotationally fixed manner, a clamping part (32) configured to receive and clamp the workpiece (2) in a releasable manner. The clamping part (32) of the workpiece holder (3) comprises at least one slot (40) provided at a circumference thereof and configured to provide access to the reference surfaces (30) of the clamped workpiece (2) therethrough.

## Description

### Technical Field

The present invention relates to a workpiece holder for manufacturing a substantially rotational-symmetrical tool such as drills and/or milling cutters, in particular a ball track milling cutter for producing ball raceways in constant velocity joints. Further the present invention relates to a method for manufacturing the rotational-symmetrical tool and to a machining device.

### Background Art

The manufacturing of a rotational-symmetrical tool such as drills and/or milling cutters, for example ball track milling cutters and/or radius end milling cutter, is a multiple-step process performed in more than one machining device. At least one of the steps includes temporarily holding a workpiece such as a rotational-symmetrical workpiece precisely in a defined position relative to a rotational axis of a machining device and relative to a machining tool such as a grinding wheel during grinding or in a laser unit. Holding means for temporarily holding the workpiece during machining are known as source of multiple errors. To machine the workpiece from all sides it is rotated around a rotational axis of the machining device, wherein the rotational axis and a longitudinal or central axis of the workpiece are preferably identical. In practice, there are fitting tolerances as well as other tolerances of the part of the holding means kept in a clamping mechanism of the machining device and tolerances for the clamping the workpiece in the holding means. Particularly when the workpiece is measured externally the machining process has to be interrupted and the repeatability of clamping may be a further source of errors. Furthermore, thermal effects during machining might change the position of the holding means relative to the clamping mechanism of the machining device and relative to the machine tool. All these effects affect the repeatability and the accuracy of manufacturing a rotational-symmetrical tool of high quality and precision.

High precise ball track milling cutters are used to machine ball raceway or track profiles for a bearing ball formed at a circumferential side of a cylindrical component of the homokinetic joint. One type of homokinetic joints comprises a spherical inner shell with grooves or tracks in it and a similar outer shell, wherein each groove or track guides one bearing ball. Homokinetic joints, known as constant velocity joints, are used in the automotive sector in particular to allow the drive shaft to transmit power through a variable angel at constant rotational speed without an appreciable increase in friction or play.

Manufacturing a ball track milling cutter includes processing the workpiece in different machining devices, for example creating a mounting part in one machining device and a functional part thereof by grinding, lasering or other suitable processing in another machining device. For manufacturing the functional part of the ball track milling cutter forming the milling head part the workpiece may not be held in a tool holder used in the milling device but in temporarily holding means. Common approaches to avoid errors by manufacturing the ball track milling cutter and to achieve an accurate geometry of the functional part include measuring of a raw functional part of the workpiece before machining and/or relying on utmost geometric accuracy of an interface between prefabricated reference surfaces of the workpiece and temporarily holding means. But it is known that each interface between the machining device and the workpiece as well as each change of the holding means can cause geometrical errors which will limit the achievable precision of the finished cutting tool and therefore may limit the precision of the performance of the finished cutting tool.

DE 10 2005 007 038 discloses a tool grinding machine with a workpiece spindle stock to receive the workpiece in a collect providing compensation of inaccuracies. For correction and/or compensation of inaccuracies, the spindle is configured to allow a motorized alignment of the collet and thus the workpiece orthogonally to the spindle axis by mechanically changing the position of the workpiece. However, the adjustment related to the diameter is restricted to compensate only small inaccuracies in limited degrees of freedom.

In EP 2 311 600 an adjustment method to minimize runout of a workpiece for a machine tool is described. The workpiece is held in a workpiece holding mechanism whereby a floating mechanism transmits rotation of a workpiece spindle to the workpiece holding mechanism and to permit movement of the workpiece holding mechanism relative to the workpiece spindle. The adjustment method includes adjustment of runout of the workpiece while rotating and horizontal adjustment of the rotational axes of the workpiece and the machining device. The adjustment method is complex, vulnerable, and furthermore restricted to only two translational degrees of freedom. Inaccuracies between clamping diameters and the diameter to be processed cannot be adjusted.

Tool holders for reversibly fastening to a machining device and for reversibly receiving a tool such as milling cutters are known. Such a tool holder or collet chuck or collet holder can be realized in a multiple part form. In general, a tool holder comprises a machine or retention part for reversibly fastening the tool holder to the machining device, i.e. to a machine spindle, and a clamping part for reversibly receiving the tool. Furthermore, the machining part can comprise shaped parts such as a conical part and a radial protruding part providing an abutment face with a corresponding counter face of a clamping mechanism of the machining device. One known type of a tool holder is referred as HSK-holder (hollow shank taper) providing a dual contact between the tool holder and the clamping mechanism of the machining device. The HSK-holder is known to provide high repeatability and accuracy as well as a fast tool changing and is only slightly affected by temperature changes.

The rotational-symmetrical tool received in the tool holder can comprise at least two portions such as a mounting part or joint part with a shaft section and a functional part or cutting part such as a milling cutter head with at least one cutting edge for removing material from the workpiece to be machined. The tool holder, adapter, spacer, extension or the like or the machine spindle itself used for holding the tool can be configured to be adapted to the mounting part of the tool and can vary accordingly. The mounting part of the tool received and securely held in the tool holder forms an interface with the tool holder. For stability, stiffness, and dimensional accuracy the interface between the tool and the tool holder is of significant importance. The interface can comprise reference surfaces which are designed specifically for example according to vendors specification.

The functional part of the rotational-symmetrical tool such as a milling cutter has at least one geometrically defined cutting edge, wherein the cutting edge can be formed as a line of intersection between a rake face and a flank face. Different types of milling cutters are known. For example, one type is configured as a solid tool comprising a base body, wherein the at least one cutting edge is formed integral with the base body. Another type is configured such that a cutting edge can be formed on a cutting tip or cutting plate configured as a separate piece of material that is brazed, soldered, welded, or clamped onto the base body made of a different material. Preferably, the cutting tip is made of a hard material such as cubic boron nitride (CBN), polycrystalline cubic boron nitride (PCBN) or polycrystalline diamond (PCD), whereby the base body can be made of a material providing toughness such as steel or carbide. In general, this type of milling cutter is machined to create on each individual cutting tip a cutting edge such as to meet a predetermined envelope surface which contribute to a final machined surface.

### Summary of Invention

One object of the invention is to provide a workpiece holder for temporarily holding a workpiece. The workpiece holder as the holding means is used in a machining device, in particular a grinding device or laser device, for manufacturing at least a part of a substantially rotational-symmetrical tool for example a shank tool or preferably a milling cutter such as a ball track milling cutter by grinding and/or lasering. The workpiece holder can be received and fastened in the machining device and is configured such that workpiece position and/or orientation in a clamped position can be measured and adjusted to avoid errors in the precision of the finished tool after machining.

Another object of the invention is to provide a method for manufacturing such a rotational-symmetrical tool including measuring steps performed at the workpiece while being held in the workpiece holder. The method provides adapting the machining process such that a position and/or orientation of the workpiece hold in the workpiece holder are considered while machining the workpiece, in particular while creating the functional part of the final rotational-symmetrical tool. The method is configured to reduce runout errors due to deviations of distance and/or angle.

Another object of the invention is to generate measurement data of the clamped workpiece related to reference surfaces of the workpiece wherein these measurement data may be used to machine the functional part of the final rotational-symmetrical tool, in particular used to manufacture a high-precision tool such as a ball track milling cutter.

Furthermore, the invention aims to provide a machining device configured to manufacture a workpiece into a rotational-symmetrical tool providing measurement of the clamped workpiece and to adapt machining processing based on measurement data of the clamped workpiece.

These objects are achieved according to the independent claims. Advantageous embodiments of the invention are disclosed in the figures and the dependent claims.

The objects are achieved by a workpiece holder for coupling a workpiece provided with reference surfaces to a machining device for manufacturing a rotational-symmetrical tool. Preferably, the workpiece holder is configured to hold a substantially rotational-symmetrical workpiece to be machined into a milling cutter, i.e. a ball track milling cutter.

The workpiece holder is configured to be connectable to the machining device in releasable rotationally fixed manner. In particular, the workpiece holder can be received and securely clamped in a clamping system of a machining device. The machine part can be configured to be received in an axial conical shaped accommodation and secured by means of the clamping system or clamping mechanism of the machining device. As a result of the geometry of an interface between the workpiece holder and the accommodation of the machining device, contact between two compatible shapes is achieved. The workpiece holder is therefore aligned relative to the machining device in axial and radial directions without play and furthermore in a releasable rotationally fixed manner. Due to the configuration of the machine part of the workpiece holder, high repeatability, and accuracy of positioning the workpiece holder relative to the machining device, i.e. relative to a machine tool such as a grinding wheel and fast changeability of the workpiece holder is achieved.

The workpiece holder comprises a clamping part configured to receive and clamp the workpiece in a releasable manner. The clamping part of the workpiece holder can be configured such to be compatible with a mounting part with reference surfaces of the workpiece such that the workpiece is securely clamped, and a raw functional part of the workpiece can be machined. The mounting part of the workpiece may be machined in at least one previous performed machining process. The mounting part can be of any shape appropriate to provide seating faces or bearing faces which bear against compatible faces of the holding means, in particular the workpiece holder such to provide axial and/or radial positioning and orientation of the clamped workpiece. The mounting part of the workpiece can comprise a shaft portion as a first seating face. The shaft portion can have a conical or cylindrical form to provide secure seating in the workpiece holder by radial positioning. The conical or cylindrical form can have a round cross-section across the entire length of the shaft portion or alternatively a rounded polygon cross-section. The shaft portion can form a transition to a radial portion configured to bear against a compatible configured surface of the workpiece holder to secure seating by axial positioning. This radial portion can be configured as a conical or annular ring providing a shoulder. The workpiece holder can be configured to provide a radial part and a conical or cylindrical part to accommodate the mounting part of the workpiece. This clamping part can be individual depending on the specification related to the tool. Furthermore, to securely hold the mounting part of the workpiece either in the workpiece holder and/or another holding means a clamping-end side of the shaft portion can be configured such to provide thread clamping or a pressed clamping.

However, the mounting part of the workpiece is configured to provide secure seating in holding means but as well provides the reference surfaces. The reference surfaces may be at least part of the cylindrical or conical shaft portion and of the adjacent radial portion which can be formed as a ring-shaped or tapered portion.

The workpiece holder comprises the clamping part to clamp the workpiece in a releasable rotationally fixed manner. The clamping part of workpiece holder is configured such that the mounting part of the workpiece is securely seated by forming interfaces in axial and radial direction between compatible configured faces of the workpiece holder and the mounting part of the workpiece. Therefore, the workpiece holder securely holds the workpiece during manufacturing the functional part of the finished rotational-symmetrical tool such as a head portion of a milling cutter such as a ball track milling cutter with at least one geometrically defined cutting edge for removing material.

According to the invention, the clamping part of the workpiece holder comprises at least one slot provided at a circumference thereof and configured to provide access to the reference surfaces of the clamped workpiece therethrough, preferably from outside. Hereinafter slot means in general an opening which can be configured in various forms such as a hole, groove, or the like.

In some cases, clamping the workpiece through its mounting part in the workpiece holder can be performed such that at least part of the mounting part of the workpiece, i.e. of the shaft portion, extends beyond the workpiece holder. Therefore, reference surfaces of the workpiece can be accessible by a measuring device for direct measurement. Short clamping of the workpiece at the rear can be an option in a laser unit. While manufacturing the functional part of the rotational-symmetrical tool by lasering almost no forces act on the clamped workpiece. In this specific case, measurement of the reference surfaces of the clamped workpiece can be performed directly and not necessarily through the provided openings or slots of the workpiece holder. The generated measurement data can be used as described hereinafter, i.e. for exacting tolerances in relation to dimension, form and/or position accuracies.

Since direct measurement at the clamped workpiece is possible, it is not necessary to repeatedly perform the steps of mounting the workpiece into the workpiece holder, machining the workpiece in the machining device, rechucking the workpiece holder and transferring the workpiece holder with the clamped workpiece to an external measurement device to measure the processed workpiece and repeating these steps until the final geometry of the functional part is reached. Repeated rechucking is in any case a potential source of errors inasmuch it may result in well-known chucking errors, making the sure achievement of high and extremely high precision impossible despite precise tool guidance. With these repeated steps including for example measuring, grinding, measuring, etc. in several iteration steps manufacturing high precise tool causes a high scrap rate and high machining time.

Direct measurements of position and/or orientation of the clamped workpiece are achieved by the access to the reference surfaces previously created on the workpiece, i.e. at the mounting part thereof through at least one slot or another opening such as hole, groove or recess provided at the circumference of the workpiece holder. The workpiece to be clamped in the workpiece holder comprises defined reference surfaces previously created. Advantageously, the at least one slot is configured as an elongated slot extending partly in a direction of a longitudinal axis of the workpiece holder and is configured that a measuring probe of a measuring device can be inserted therethrough, preferably from outside such to directly contact at least part of the reference surfaces of the clamped workpiece. Measuring or probing by touching the reference surfaces broadly contemplates the use of non-contact probe tips, such as laser probes and electrostatic probes. Furthermore, advantageously the at least one slot is configured such that measurement of the reference surfaces is provided. According to one embodiment, the measurement can be performed by optical measuring devices such as cameras or laser systems or other measuring devices which can be integrated or mounted on the machining device. Preferably, the opening or slot is configured that tactile measuring is provided. Therefore, a measuring probe can be inserted and can be moved along defined directions while contacting the reference surfaces.

In one embodiment, the preferably elongated slot can be configured that at least part of a 3D-measuring probe of the measuring device can be inserted therethrough. A dimension of the at least one slot can be configured such that a measuring head of the measuring probe can be inserted with play. For example, by using a spherical measuring head the width of the at least one slot may be 0.5 to 1 mm greater as the diameter of the spherical measuring head. Advantageously, a plurality of slots can be provided at the circumference of the workpiece holder. The number and arrangement of the slots at the circumference of the workpiece holder can vary in a certain range, but preferably the number of the slots can be 3 and more unless the mechanical stability of the clamping of the workpiece is still given.

According to one aspect of the invention, the workpiece holder is configured to hold the workpiece holder while machining the functional part of the rotational-symmetrical tool.

According to one embodiment the workpiece holder is configured to hold the workpiece while machining at least one cutting tip connected to a base body of the workpiece to create a geometrically defined cutting edge of the rotational-symmetrical tool. Preferably, the rotational-symmetrical tool is a ball track milling cutter.

In general, one type of a rotational-symmetrical tool comprises a base body and a cutting tip or cutting plate connected to the base body and providing the at least one geometrically defined cutting edge. For example, a ball track milling cutter can be configured with bonded cutting tips or cutter blades made of a hard material. For manufacturing a high precise ball track milling cutter from the workpiece with bonded cutting tips, a precise grinding process and/or lasering process is necessary to meet the very high surface and dimensional requirements. To obtain the predetermined plane running accuracy of the finished tool careful measurements must be performed such that the manufacturing tolerances of the functional part of the ball track milling cutter which are generally too high, are corrected to the plane running accuracy necessary for the finished ball track milling cutter.

According to another embodiment of the invention the workpiece holder comprises at least one cam or notch provided at an outer circumferential diameter thereof. The at least one cam or notch is configured to trigger at least one measurement process in a predetermined position of the workpiece holder in the machining device. Triggering activates the measuring device comprising the measuring probe, in particular a 3D-measuring probe, to be inserted into the at least one slot and to directly contact the reference surfaces of the workpiece hold in the workpiece holder. Furthermore, the cam or notch provided can be used for positioning the workpiece holder relative to the machining device in the clamping system. If the workpiece holder is connected to the machining device, the workpiece holder can be rotated about a rotational axis, for example the socalled B-axis to a predetermined position.

According to one embodiment, the workpiece holder provides measurement of a displacement of a rotational axis of the machining device and the longitudinal axis of the workpiece holder. This displacement can include displacements of the longitudinal axis of the workpiece holder either to the rotational axis of the machining device and/or to a workpiece axis. Due to the direct access to the clamped workpiece, preferably to the reference surfaces of the clamped workpiece from outside, the relation between the reference surfaces of the clamped workpiece and reference points and/or reference axes of the machining device can be used to verify positioning and/or orientation of the clamped workpiece. Furthermore, measurement data can be used to generate a reliable coordinate system based thereon the manufacturing of the functional part of the rotational-symmetrical tool can be performed.

Due to the direct measurement from the outside deviations caused by setting errors of machining device, workpiece holder and/or workpiece relative to each other can be detected. Therefore, setting errors can be corrected in advance to the machining process or can be considered by adjustment of the machining process. The adjustment of the machining process can include settings with respect to rotation, pitch, and plane movement such to avoid displacement or offset of axes causing slight run-out of the workpiece each time the workpiece rotates.

An advantage of the workpiece holder according to the invention is the accessibility of the reference surfaces of the clamped workpiece by the measuring probe. Measurement of the clamped workpiece can be performed to determine an axis displacement of a rotational axis of the machining device, in particular the B-axis and/or the workpiece axis, furthermore including displacements of the workpiece axis and the longitudinal axis of the workpiece holder and/or the longitudinal axis of the workpiece holder and the rotational axis of the machining device which can be corrected based on the measurement values such that the position of the workpiece axis can be corrected and fixed at a desired position with respect to the rotational machine axis.

According to one embodiment of the invention a method for manufacturing a rotational-symmetrical tool with at least one geometrically defined cutting edge using a workpiece holder according to the invention to hold the workpiece is provided. The workpiece provides reference surfaces and preferably comprises at a raw functional part thereof at least one cutting tip. The method comprises the steps of connecting the workpiece holder to a clamping system of the machining device in a releasably rotationally fixed manner, connecting a mounting part of the workpiece to the workpiece holder, performing at least one measurement process for generating measuring data by introducing a measuring probe of a measuring device through at least one slot provided at a circumference of the workpiece holder to contact reference surfaces of the clamped workpiece, correcting detected displacements between a rotational axis of the machining device, and a workpiece axis and processing the measuring data to obtain a curve of an at least one geometrically defined cutting edge of the rotational-symmetrical tool related to the reference surfaces of the workpiece used for manufacturing the rotational-symmetrical tool by the machining process.

In another embodiment of the invention the step of processing the measurement data to obtain the curve of the geometrically defined cutting edge uses a predetermined envelope surface of a functional part of the rotational-symmetrical tool. The measurement data can include data related to position of the at least one connected cutting tip related to a coordinate system, preferably the position of each of the plurality of cutting tips. The coordinate system can be related to the reference surfaces for each individual clamped workpiece.

For each rotational-symmetrical tool a predetermined ideal envelope surface is known. An envelope surface of a tool such as a milling cutter can be seen as a combination of segments of individual envelope surfaces of each cutting edge which contribute to a predetermined final machined surface. The individual envelope surface of each cutting edge can be generated as a rotational surface by rotating about the machining axis. Therefore, deviations from an ideal position of the cutting edge as well as existence of run-out creates a valid envelope surface which differs from the predetermined ideal envelope surface. By machining the geometrically defined cutting edge at each of the cutting tips the measurement data determined at each of the cutting tips can be used to generate a machining process adapted to create an ideal cutting edge with regard to the predetermined ideal envelope surface.

However, each of a plurality of cutting tips is to be measured individually to determine the measuring data of this cutting tip to be processed for calculating the ideal or effective cutting edge. The measurement process of each individual cutting tip can include determining a position of the cutting tip by using the measuring probe of the measuring device. Preferably, the measurement to determine the real position of the individual cutting tip is performed even if the workpiece is exactly oriented in the workpiece holder. The measuring probe is inserted into at least one slot of the workpiece holder and determines by contact or without direct contact a rough position of this cutting tip. After determining the rough position of this cutting tip measurements with the measuring probe is performed at different measuring points on this cutting tip, preferably at least at 3 measuring points. The obtained measurement data includes a real and accurate position of this cutting tip and can be processed to generate or to calculate a virtual plane of the real positioned cutting tip.

A calculated shape of the geometrically defined cutting edge, in particular a curve, can be seen as an intersection line of the predetermined ideal envelope surface with the virtual plane of the real positioned cutting tip. By processing the measurement data and by calculating the intersection line of each individual cutting edge used to define a machining path to create the geometrically defined cutting edge and/or for example chamfer thereof the functional part of the cutting tool can be manufactured with high precision.

Another aspect of the invention relates to a machining device configured to manufacture a workpiece into a rotational-symmetrical tool. The machining device can be a multiple axes grinding device generally known comprising at least a control unit or controller, a clamping system to hold a workpiece holder according to the present invention and a measuring device adapted to perform measurement at the clamped workpiece.

### Brief Description of the Figures

For a more complete understanding of the invention and the advantages thereof, exemplary embodiments of the invention are explained in more detail in the following description with reference to the accompanying figures, in which like reference characters designate like parts and in which:
Figure 1 is a schematic perspective view of a rotational-symmetrical cutting tool, in particular a ball track milling cutter;
Figure 2 is a schematic perspective view of a workpiece holder according to a first embodiment of the invention;
Figure 3 is a schematic longitudinal section view of the workpiece holder according to the first embodiment of the invention and a workpiece inserted therein;
Figure 4 is a schematic section view of the workpiece holder of the first embodiment with a mounted workpiece and a measuring probe during a measurement process;
Figure 5 is a schematic side view of a ball track milling cutter showing real and ideal positions of cutting tips of a rotational-symmetrical tool with a plurality of geometrical defined cutting edge;
Figure 6 is a schematic perspective view of parts of a grinding device to machine a workpiece into a cutting tool showing the workpiece clamped into the workpiece holder according an embodiment shown in Figure 2;
Figure 6a is a detail of the grinding device shown in Figure 6.

### Detailed description of the drawing

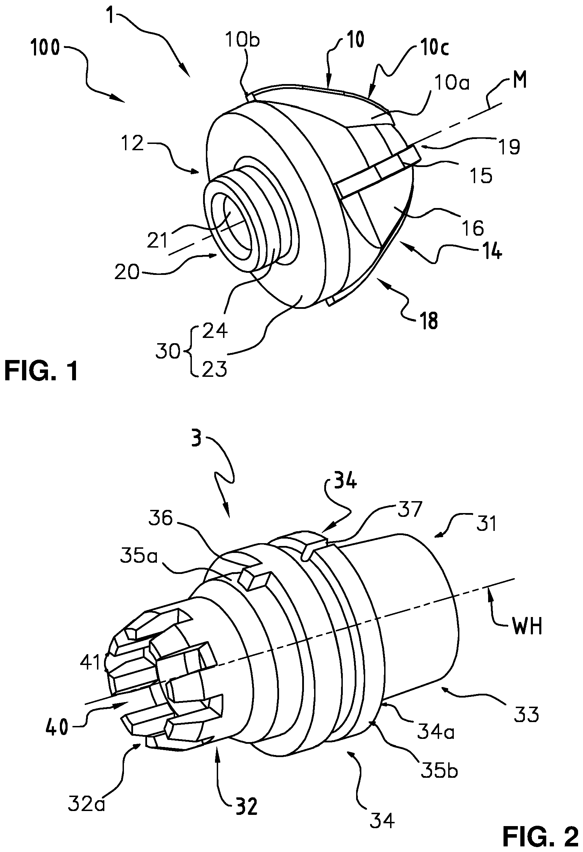

Figure 1 shows a perspective view of a head part of rotational-symmetrical tool 1 with at least one geometrically defined cutting edge 10, here a total of four geometrically defined cutting edges 10, only one of which is designated. A plurality of cutting edges 10 is evenly spaced in circumferential direction and preferably each geometrically defined cutting edge 10 is identical designed. The cutting edge 10 can be formed as an intersection line between a rake face 10a and a flank face 10b which are respectively associated with the cutting edge 10 and which can include a chamfer 10c.

The rotational-symmetrical tool 1 can be a ball track milling cutter 100, which is configured to be received and held in a tool holder of a milling device, in particular clamped in a spindle of the milling device. The rotational-symmetrical tool 1 comprises a mounting part 12, referred as well as a shaft portion and a functional part 14 provided with at least one geometrically defined cutting edge 10 at a head portion 18 of the rotational-symmetric tool 1. The head portion 18 includes a base body 16, preferably made of steel or carbide and a plurality of the geometrical defined cutting edges 10 forming the functional part 14 of the tool 1. Hereinafter, the term functional part 14 describes the finished functional part 14 of the tool 1 but as well a raw functional part 14 of a workpiece to be machined into the finished functional part 14 of the tool 1. In the embodiment shown in Fig. 1 the cutting edges 10 are formed on cutting tips 15 connected to the base body 16, preferably by soldering or brazing. The cutting edge 10 comprises or is made of a hard material which can be selected from the group consisting of cubic boron nitride (CBN), polycrystalline cubic boron nitride (PCBN) and polycrystalline diamond (PCD).

The cutting edges 10 of the functional part 14can be manufactured by removing material from the connected cutting tip 15 made of hard material by grinding, by means of laser or an erosion process. The cutting edge 10 is machined, preferably ground, on each cutting tip 15 already fastened to the base body 16. The grinding process can be performed in an automated multiple axis grinding machine controlled by a control unit and according to a programmable computer program product. Manufacturing the at least one geometrically defined cutting edge 10 with a defined cutting profile by removing material from the cutting tip 15 is an object of the method of the invention.

The head portion 18 has an imaginary center axis M which corresponds to a rotational axis of the tool 1 during the intended machining of workpiece in a tool device. Furthermore, the head portion 18 has a working-end side 19 and a clamping-end side 20 as the mounting part 12 opposite the working-end side 19 along the central axis M. The working- end side19 of the ball track milling cutter 100 shown in Fig. 1 faces the workpiece intended to be machined by a milling device.

On the opposite end to the working-end side 19 of the rotational-symmetrical tool 1, preferably the ball track milling cutter 100, i.e. at the clamping-end side 20 the mounting part 12 is provided, preferably configured as the shaft portion. It is mentioned that the mounting part 12 including the clamping-end side 20 of the tool 1 is manufactured previous to manufacturing the functional part 14 thereof. Therefore, the mounting part 12 of a workpiece 2 (not shown in Fig.1) corresponds to the finished tool 1. In the embodiment shown, the mounting part 12 is cylindrical but can be as well configured conical in the direction to the clamping- end side 20. The clamping-end side 20 can include an internal thread 21 connectable to a complementary thread part provided by holding means of the machining device. The clamping-end side 20 can be configured in different forms such as providing an external thread or the like wherein the clamping-end side 20 can be fastened to the holding means securely and in a releasable rotationally fixed manner.

The mounting part 12 including the shaft portion which can be integrally attached to the head part 18 of the tool 1 comprises towards the head part 18 a first seating face 23, which in the clamped position bears against an end face of the holding means (not shown). The first seating face 23 can be configured as a radial portion merging to the shaft portion 12 and configured as a conical or annular face providing a shoulder. Between the first seating face 23 and the clamping-end side 20 a conical or cylindrical formed second seating face 24 is provided. The conical or cylindrical second seating face 24 and the first seating face 23 form interfaces in axial and radial direction with compatible formed portions of the holding means when the mounting part 12 is inserted and fastened into the holding means of the machining device. The conical or cylindrical second seating face 24 and the radial formed first seating face 23 form reference surfaces 30 of the tool 1 and as explained of the workpiece 2 (not shown in Fig. 1).

However, manufacturing the rotational-symmetrical tool 1 is a multiple step process. In a previous step the rotational-symmetrical workpiece 2 (not shown in Fig. 1) with a central workpiece axis W (not shown in Fig. 1) is processed to form the clamping-end side 20, the first seating face 23 and the second seating face 24 providing the reference surfaces 30 and configured to be connectable to holding means such as a workpiece holder 3 (not shown in Fig. 1).

Figure 2 shows a perspective view of the workpiece holder 3 of a preferred embodiment. The workpiece holder 3 comprises a machine part 31 and a clamping part 32. In accordance with the shown embodiment of the workpiece holder 3, the machine part 31 is insertable into a clamping system (not shown in Fig. 2) of a machining device. The rotational-symmetrical workpiece 2 (not shown in Fig. 2) may be attached to the clamping part 32 of the workpiece holder 3 in a releasable rotationally fixed manner. The workpiece holder 3 comprises on the machine part 31 a conical or cylindrical portion 33 and a radial flange portion 34. As shown in Fig. 2 the radial flange portion 34 is located between the machine part 31 and the clamping part 32. The conical or cylindrical portion 33 extends along a longitudinal axis WH of the workpiece holder 3. In the case of a conical shaped portion 33, the conical shape is inclined in a predetermined angle and assists in centering the workpiece holder 3 in the clamping system of the machining device. The radial flange portion 34 may be formed as a shoulder providing an end surface 34a perpendicular to the longitudinal axis WH of the workpiece holder 3 and forming an abutment or bearing face with the clamping system of the machining device when the workpiece holder 3 is clamped.

For connecting the workpiece holder 3 to the machining device the clamping system thereof can comprise drawback fingers or segmented collets which are configured with clamping surfaces structured and arranged to engage an inner surface of the workpiece holder 3. The drawback fingers can be forced radially outwards to clamp for example a hollow shank workpiece holder 3 in the clamping system of the machining device. The hollow shank workpiece holder 3 may be designed as a known hollow shank tool holder HSK.

According to Fig. 2 the workpiece holder 3 comprises at an outer circumferential diameter 35a a cam 36 protruding from the circumferential diameter 35a. Furthermore, in the embodiment shown, a notch 37 is provided at a second circumferential diameter 35b. When the workpiece holder 3 is received and securely connected by the clamping system of the machining device in a releasable rotationally fixed manner the workpiece holder 3 as well as the cam 36 and/or the notch 37 can be rotated about the longitudinal axis WH of the workpiece holder 3. At a predetermined position the cam 36 and/or the notch 37 triggers a measuring device 50 (not shown in Fig. 2) comprising a measuring probe 51 (not shown in Fig. 2) to be moved from a rest position to a measuring position. In the measuring position the measuring probe 51 gets direct contact to the reference surfaces 30 of the clamped workpiece 2. The movement of the measuring probe 51 can be controlled by a controller (not shown in Fig. 2).

As shown in Fig. 2, the workpiece holder 3 comprises at the clamping part 32 a series of slots 40 arranged at a circumference, preferably evenly arranged around the circumference and identical designed. Each slot 40 extends about a predeterminable length from a clamping part end 32a towards the machine part 31 parallel to the longitudinal axis WH of the workpiece holder 3. In one preferred embodiment, each slot 40 has a width 41 adequate to allow passage of the measuring probe 51 to contact portions of the clamped workpiece 2, in particular to get direct access to the reference surfaces 30 of the workpiece 2. The number and arrangement of the slots 40 can vary, preferably the number is at least 3 slots 40 which can be distributed evenly about the circumference of the workpiece holder 3.

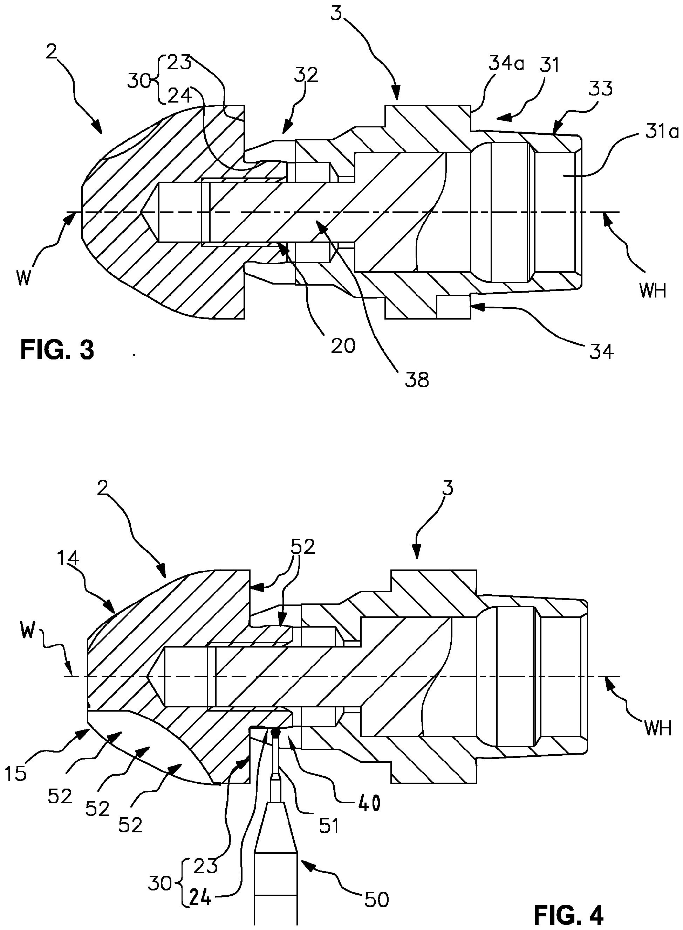

Figure 3 shows a schematic longitudinal section view of the workpiece holder 3 shown with the workpiece 2 inserted and clamped by the clamping part 32 of the workpiece holder 3. The machine part 31 of the workpiece holder 3 is configured with an opening 31a at the end configured and arranged to receive parts of the clamping system of the machining device. The workpiece 2 including the reference surfaces 30, in particular the first seating face 23 extending in radial direction and the second seating face 24 extending in axial direction seen from the central workpiece axis W is inserted in the workpiece holder 3 such the first seating face 23 and the second seating face 24 forms interfaces with complementary formed faces of the workpiece holder 3, respectively. Therefore, the workpiece holder 3 provides at his clamping part 32 a radial part and a conical or cylindrical part at least partially formed complementary to the first seating face 23 and the second seating face 24 of the workpiece 2 such that a secure seating of the workpiece 2 in the workpiece holder 3 is provided. The radial part and the conical or cylindrical part of the workpiece holder 3 is not visible in Fig. 3.

The workpiece 2 is fastened in the workpiece holder 3 by means of fixation means 38 provided by the workpiece holder 3. The fixation means 38 can be configured with a thread to be connectable to the thread formed at the clamping-end side 20 of the workpiece 2.

Figure 4 shows a longitudinal section view of the workpiece holder 3 with the inserted and clamped workpiece 2 and a measuring probe 51 during a measuring process. As can be seen in Fig. 4, the workpiece 2 is in axial and radial direction positioned in the workpiece holder 3 such that the longitudinal axis WH of the workpiece holder 3 and the central axis W of the workpiece 2 are aligned.

By triggering the measuring process performed in a controlled manner by the measuring device 50 the measuring probe 51, preferably a 3D measuring probe with a spherical measuring head, is moved from a rest position to a measuring position. In one of the measuring positions the measuring probe 51 is partially inserted into the at least one slots 40 provided at the workpiece holder 3 and configured to allow partial passage of the measuring probe 51 therethrough to directly contact the reference surfaces 30 of the clamped workpiece 2. The inserted measuring probe 51 contacting the reference surfaces 30 of the clamped workpiece 2 allows measurements in different directions and in different orientations not only by contacting the reference surfaces 30 but as well by moving on the reference surfaces 30. Different measurement points 52 are shown, wherein a plurality of the measurement points 52 can be located at the reference surfaces 30, in particular the first seating face 23 and the second seating face 24 of the workpiece 2, and a plurality of measuring points 52 can be located at the raw functional part 14 of the workpiece 2, in particular at different positions on the cutting tip 15.

By measuring at different points 52 the virtual plane of the real positioned cutting tip and/or a virtual centrum of the central workpiece axis W of the clamped workpiece 2 may be calculated from the measurement data. To ensure correct orientation of the workpiece 2 clamped in the workpiece holder 3 the rotation of the workpiece 2 about an axis of the machining device may be simulated and monitored by the inserted measuring probe 51 as well as calculated by a controller. Furthermore, by measuring on the cutting tip 15 on at least 3 measuring points 52 the real position of the cutting tip 15 can be determined. The measuring data can be used for calculating an ideal shaped and positioned geometrical defined cutting edge 10 and for manufacturing this geometrically defined cutting edge 10 by grinding or lasering.

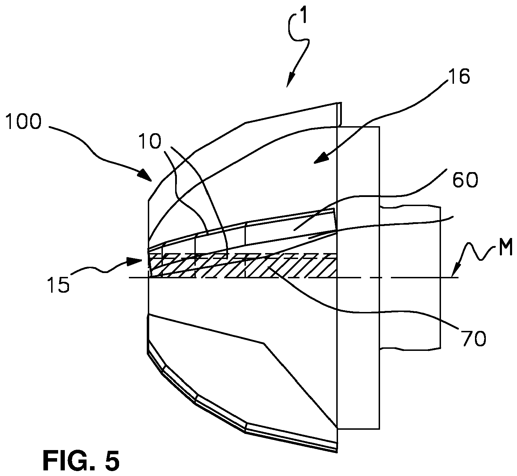

Figure 5 shows a schematic side view of the ball track milling cutter 100 showing a real position 60 of the cutting tip 15 and/or the cutting edge 10 and an ideal position 70 of the cutting tip 15 and/or the cutting edge 10. The real position 60 of the cutting tip 15 can be seen as a result of the connecting process of the cutting tip 15 to the base body 16, for example by soldering or brazing as well as of the original form of the cutting tip 15 to be connected. According to one embodiment, the geometrically defined cutting edge 10 is produced on the cutting tip 15, preferably after connecting the cutting tip 15 to the base body 16. The cutting tip 15 connected to the base body 16 usually have a circular or oval form and provides enough material which can be removed to for an ideal profile of the geometrically defined cutting edge 10.

Manufacturing the cutting edge 10 can be performed by a method according to the invention including measuring the real position 60 of the cutting tip 15. The method can be controlled by a control unit such that a computer program product is running on the control unit or another computing device set up for controlling a machining device such as a grinding device and operatively connected with the machining device. The machining device preferably comprises the control unit or computing device that runs the computer program and a data storage device.

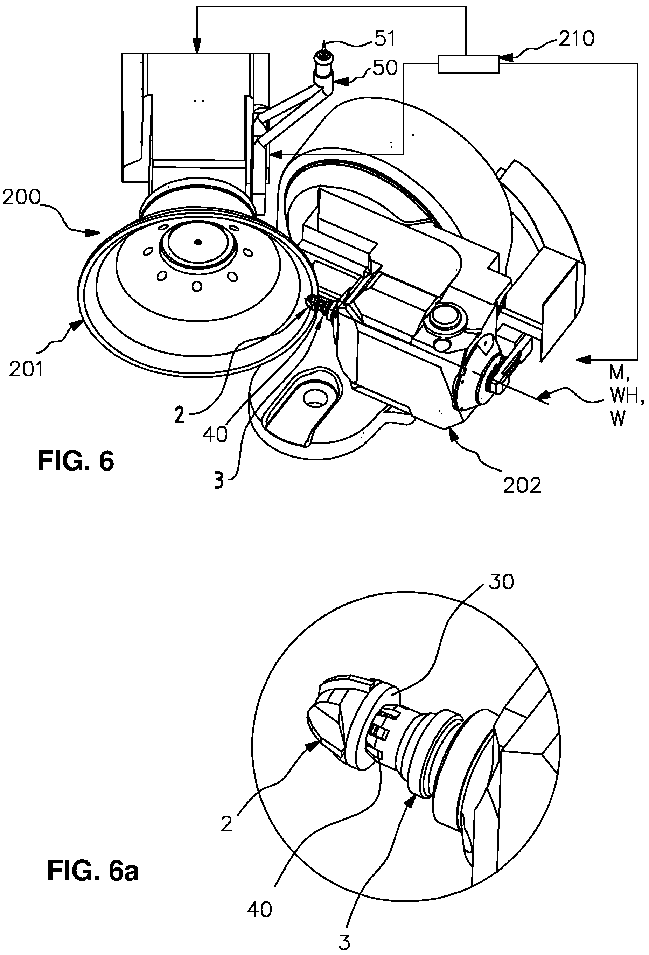

Figure 6 is a schematical perspective view of parts of a machining device 200, in particular a grinding machine with a grinding wheel 201. The grinding machine 200 comprises *inter alia* a clamping system 202 to receive and clamp the workpiece holder 3. The workpiece holder 3 is configured to be releasable rotatable fixed to the grinding device 200, in particular to the clamping system 202. The workpiece 2 is inserted and hold in the workpiece holder 3. Furthermore the measuring device 50 is arranged such that the measuring probe 51 of the measuring device 50 can be moved from a rest position (shown) into a measuring position, wherein the measuring probe 51 is partially inserted through at least one slot 40 or openings provided at the workpiece holder 3. The at least one slot 40 is provided such that the measuring probe 51 can contact reference surfaces 30 provided at the workpiece 2 which are at least partially covered by the workpiece holder 3. As indicated in the Fig. 6 the machine device 200 comprises a control unit 210, configured to control the performance of the machining device 200 but as well as controlling measurement process of the measurement device 50. The central axis W of the workpiece 2 and the longitudinal axis WH of the workpiece holder 3 are aligned with the rotational axis M of the machining device 200. Small misalignments of the axes will be measured by the measuring probe 51 and can be considered by processing the measurement data according to the method described.

Figure 6a shows a detail of the clamped workpiece 2 hold in the workpiece holder 3. The slots 40 provided at the workpiece holder 3 are arranged and configured that measurement of the reference surfaces 30 are possible even if at least part of the reference surfaces 30 are covered by the workpiece holder 3.

## Claims

1. Workpiece holder (3) for coupling a workpiece (2) provided with reference surfaces (30) to a machining device (200) for manufacturing a rotational-symmetrical tool (1) with at least one geometrically defined cutting edge (10), the workpiece holder (3) comprises
- a machine part (31) configured to be connectable to the machining device (200) in a releasable rotationally fixed manner,
- a clamping part (32) configured to receive and clamp the workpiece (2) in a releasable rotationally fixed manner,
**characterized in that** the clamping part (32) of the workpiece holder (3) comprises at least one slot (40) provided at a circumference thereof and configured to provide access to the reference surfaces (30) of the clamped workpiece (2) therethrough.

2. Workpiece holder (3) according to claim 1, **characterized in that** the clamping part (32) of the workpiece holder (3) comprises a conical or cylindrical part and a radial flange part configured to form interfaces with the compatible formed reference surfaces (30) of the clamped workpiece.

3. Workpiece holder (3) according to claim 1 or 2, **characterized in that** the at least one slot (40) is configured as an elongated slot (40) extending partly in a direction of a longitudinal axis (WH) of the workpiece holder (3) and is configured that a measuring probe (51) of a measuring device (50) can be inserted therethrough such to directly contact at least part of the reference surfaces (30).

4. Workpiece holder (3) according to claim 1 or 2, **characterized in that** the at least one slot (40) is configured such that a non-contact measuring of the reference surfaces (30) by an optical measuring device (50) is performed.

5. Workpiece holder (3) according to one of the proceeding claims, **characterized in that** a plurality of slots (40) is provided.

6. Workpiece holder (3) according to one of the proceeding claims, **characterized in that**, the workpiece holder (3) is configured to hold the workpiece (2) while machining a functional part (14) of the rotational-symmetric tool (1).

7. Workpiece holder (3) according to one of the proceeding claims, **characterized in that** the workpiece holder (3) is configured to hold the workpiece (2) while machining at least one cutting tip (15) connected to a base body (16) of the workpiece (2) to create the geometrically defined cutting edge (10) of the rotational-symmetrical tool (1).

8. Workpiece holder (3) according to one of the proceeding claims **characterized in that** the rotational-symmetrical tool (1) is a ball track milling cutter (100).

9. Workpiece holder (3) according to one of the proceeding claims, **characterized in that** the workpiece holder (3) comprises at least one cam (36) at a first circumferential diameter (35a) and/or a notch (37) at a second circumferential diameter (35b) thereof, which cam (36) and/or notch (37) is configured to trigger at least one measurement process in a predetermined position of the workpiece holder (3) in the machining device (200).

10. Workpiece holder (3) according to claim 9, **characterized in that** the workpiece holder (3) provides measurement of a displacement of the rotational axis (M) of the machining device (200) and a workpiece axis (W).

11. Method for manufacturing a rotational-symmetrical tool (1) with at least one geometrically defined cutting edge (10) using a workpiece holder (3) according to one of the claims 1 to 10 for coupling a workpiece (2) provided with reference surfaces (30) to a machining device (200) comprising the following steps:
- connecting a machine part (31) of the workpiece holder (3) to a clamping system (202) of the machining device (200) in a releasable rotationally fixed manner;
- connecting a mounting part (12) of the workpiece (2) to a clamping part (32) the workpiece holder (3) in a releasable rotationally fixed manner;
- performing at least one measurement process and generating measurement data of the clamped workpiece (2) by introducing a measuring probe (51) of a measuring device (50) through at least one slot (40) provided at a circumference of the workpiece holder (3) to contact the reference surfaces (30) of the clamped workpiece (2),
- processing the measurement data to obtain a real orientation of the workpiece axis (W) for correcting detected displacements between a rotational axis of the machining device (Mand the workpiece axis (W),
- processing the measurement data to obtain a curve of at least one geometrically defined cutting edge (10) of the rotational-symmetric tool (1) related to the reference surfaces (30) of the workpiece (2) for manufacturing the rotational-symmetrical tool (1) by the machining process.

12. Method according to claim 11, **characterized in that** processing the measurement data includes calculating a virtual plane of a real positioned cutting tip (15) of the workpiece (2) and using the virtual plane of the real positioned cutting tip (15) to obtain the curve of the at least one geometrically defined cutting edge (10) as an intersection line of a predetermined envelope surface of a functional part (14) of the rotational-symmetrical tool (1) with the virtual plane of the real positioned cutting tip (15) of the workpiece (2).

13. Machining device (200) for manufacturing a rotational-symmetrical tool (1) by a method according to claims 11 or 12, comprising
- a control unit (210)
- a machining tool such as a grinding wheel (201),
- a clamping system (202) configured to receive and connect a workpiece holder (3) according to one of the claims 1 to 10 in a releasable rotatable fixed manner
- a measuring device (50) comprising a measuring probe (51) configured to be inserted through at least one slot (40) provided at a circumference of the workpiece holder (3) such to directly perform measuring of the reference surfaces (30) of the clamped workpiece (2).

14. Machining device (200) according to claim 13, **characterized in that** the machining device (200) is a multiple axis grinding device.
